# EUROPEAN PATENT SPECIFICATION

(11) **EP 4 170 752 B1**
(45) Date of publication and mention of the grant of the patent: **11.11.2026**
(21) Application number: 22831549.5
(22) Date of filing: 26.05.2022
(51) Int. Cl.: H01M 4/36, H01M 4/583, H01M 4/60, H01M 4/62, H01M 10/0525, H01M 4/48, H01M 4/38, H01M 4/13, H01M 4/139, H01M 4/587

(54) **NEGATIVE ELECTRODE MATERIAL, PREPARATION METHOD THEREFOR, AND LITHIUM ION BATTERY**
NEGATIVELEKTRODENMATERIAL, HERSTELLUNGSVERFAHREN DAFÜR UND LITHIUM-IONEN-BATTERIE
MATÉRIAU D'ÉLECTRODE NÉGATIVE, PROCÉDÉ DE PRÉPARATION ASSOCIÉ ET BATTERIE AUX IONS DE LITHIUM

(30) Priority: 29.06.2021 CN 202110727563
(43) Date of publication of application: 26.04.2023
(73) Proprietor: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: HE, Peng, Shenzhen, Guangdong 518106 (CN); XIAO, Chengmao, Shenzhen, Guangdong 518106 (CN); GUO, Eming, Shenzhen, Guangdong 518106 (CN); REN, Jianguo, Shenzhen, Guangdong 518106 (CN); HE, Xueqin, Shenzhen, Guangdong 518106 (CN)
(74) Representative: Müller Schupfner & Partner Patent- und Rechtsanwaltspartnerschaft mbB (Muc)
(86) International application number: PCT/CN2022/095217
(87) International publication number: WO 2023/273726

(56) References cited:
- EP-A1- 3 849 001
- EP-A1- 4 241 320
- WO-A1-2020/238658
- CN-A- 103 682 287
- CN-A- 105 070 894
- CN-A- 108 232 151
- CN-A- 112 018 334
- CN-A- 112 219 293
- CN-A- 113 422 029
- JP-A- 2010 118 330
- KR-A- 20200 075 209
- US-A1- 2022 069 304

## Description

### Cross-reference to related applications

This application claims priority to Chinese Patent Application No. 202110727563.0 entitled "Negative electrode material, preparation method and lithium ion battery" filed on June 29, 2021.

### TECHNICAL FIELD

The present disclosure relates to the field of lithium ion battery negative electrode material, in particular, to a negative electrode material preparation method thereof, and lithium ion battery.

### BACKGROUND

Lithium ion battery is widely used in electric vehicles and consumer electronics products due to advantages of high energy density, high output power, long cycle life, and little environmental pollution. In order to improve the energy density of the lithium ion battery, research and development of silicon negative electrode materials tend to be mature gradually. However, the volume of the negative electrode material expands greatly during the deintercalating lithium process, and in particular, the volume of the silicon negative electrode material expands to more than 300% during the deintercalating lithium process, such that the silicon negative electrode material is pulverized and falls from the current collector during a charging and discharging process, therefore, an electrical connection between the anode active material the current collector is broken, resulting in poor electrochemical performance, capacity fade, reduced cycle stability, and difficulty in commercial applications. Relevant documents in this context are EP4241320 A1, WO 2020/238658 A1, EP3849001 A1, KR 20200075209 A and US2022/069304 A1.

Therefore, how to suppress volume expansion of the negative electrode material and increase the cycling stability of the material is a problem that is currently and urgently to be solved.

### SUMMARY

The present invention provides a negative electrode material, the negative electrode material comprises an aggregate, the aggregate comprises an active material and a carbon material, wherein the aggregate has a porosity of ≤ 10% and the aggregate has a compressive hardness of ≧ 100 MPa, as defined in the appended claims.

The active material comprises at least one of an oxide of silicon, a non-metal element, an elemental metal, and an alloy of the elemental metal with silicon;

In some embodiments, the elemental metal comprises at least one of Li, Na, K, Sn, Ge, Fe, Mg, Ti, Zn, Al, and Cu;

In some embodiments, the non-metal element comprises at least one of Si and P;

In some embodiments, the oxide of silicon comprising SiOx, wherein 0 < x ≤ 2;

In some embodiments, the alloy of the elemental metal with silicon comprises at least one of a silicon lithium alloy, a silicon sodium alloy, a silicon potassium alloy, a silicon tin alloy, a silicon germanium alloy, a silicon iron alloy, a silicon magnesium alloy, a silicon titanium alloy, a silicon-zinc alloy, a silicon aluminum alloy, and a silicon copper alloy;

In some embodiments, the active material has a median particle size ranging from 1 nm to 500 nm;

In some embodiments, the carbon material comprises at least one of amorphous carbon, crystalline carbon, and mesocarbon microbeads;

In some embodiments, the amorphous carbon comprises at least one of hard carbon and soft carbon;

In some embodiments, a mass ratio of the active material to the carbon material is (30-70): (10-70);

In some embodiments, an aggregate density satisfies the following relationship: (ρ2-ρ1) ρ2 ≤ 5%, wherein, ρ1 is a test density of the aggregate, ρ2 is a theoretical density of the aggregate, and ρ2 is a sum of a mass percent of each component in the aggregate * a value of a theoretical density of each component in the aggregate.

In some embodiments, the aggregate further comprises a metal oxide;

In some embodiments, the metal oxide is distributed in the active material, and the carbon material is filled between the active material and the metal oxide;

In some embodiments, pores are provided between the active material and the metal oxide, and the pores are filled with the carbon material;

In some embodiments, the metal oxide having a chemical formula of MₓO_{y}, wherein 0.2 ≤ y/x ≤ 3, and M comprises at least one of Sn, Ge, Fe, Cu, Ti, Na, Mg, Al, Ca, and Zn;

In some embodiments, the metal oxide is in a form of a sheet and/or a long strip;

In some embodiments, the metal oxide has an aspect ratio greater than 2;

In some embodiments, the active material and the metal oxide have a mass ratio of (30-70): (1-20).

According to the invention, the aggregate further comprises an electrical conductivity enhancer;

According to the invention, the conductive enhancer comprises at least one of an alloy material and a conductive carbon;

In some embodiments, the alloy material comprises at least one of a zinc alloy, an aluminum alloy, a copper alloy, a silicon alloy, a nickel alloy, and a titanium alloy;

According to the invention, the conductive carbon comprising one of graphite fibers, carbon nanotubes, graphite sheets, conductive carbon fibers, and graphene;

According to the invention, the conductivity enhancer has a conductivity of 10⁰ S/m to 10⁸ S/m;

According to the invention, the conductive enhancer is in a form of a sheet and/or a long strip;

According to the invention, the conductive enhancer has an aspect ratio of 2:1 to 5000:1;

In some embodiments, the conductive enhancer and the active material have a mass ratio of (0.1-10): 100.

In some embodiments, the negative electrode material further comprises a carbon layer coated on at least part of a surface of the aggregate;

In some embodiments, the carbon layer of the surface of the aggregate has a coating rate of 1%-100%;

In some embodiments, and the carbon layer comprises amorphous carbon;

In some embodiments, and the carbon layer has a thickness of 10 nm to 1500 nm;

In some embodiments, the negative electrode material has a median particle size of 0.5 µm-30 µm;

In some embodiments, the negative electrode material has a specific surface area of ≤10m^{2/}g.

The present disclosure provides a method for preparing a negative electrode material, comprising the following steps:
preparing a precursor from a mixture comprising an active material, a first carbon source, and a solvent; and
densifying the precursor to obtain an aggregate having a porosity of ≤ 10% and a compressive hardness of ≧ 100 MPa.

In some embodiments, the first carbon source comprises at least one of sucrose, glucose, polyethylene, polyvinyl alcohol, polyethylene glycol, polyaniline, epoxy resin, phenolic resin, furfun resin, acrylic resin, polyethylene oxide, polyvinylidene fluoride, polyacrylonitrile, polyvinyl chloride, and asphalt;

In some embodiments, the active material comprises at least one of an oxide of silicon, a non-metal element, an elemental metal, and an alloy of the elemental metal with silicon;

In some embodiments, the elemental metal comprises at least one of Li, Na, K, Sn, Ge, Fe, Mg, Ti, Zn, Al, and Cu;

In some embodiments, the non-metal element comprises at least one of Si and P.

In some embodiments, the oxide of silicon comprises SiOx, wherein 0 < x ≤ 2;

In some embodiments, the alloy of the elemental metal with silicon comprises at least one of a silicon lithium alloy, a silicon sodium alloy, a silicon potassium alloy, a silicon tin alloy, a silicon germanium alloy, a silicon iron alloy, a silicon magnesium alloy, a silicon titanium alloy, silicon-zinc alloy, a silicon aluminum alloy, and a silicon copper alloy;

In some embodiments, a mass ratio of the active material to the first carbon source is (15-120): (10-50);

In some embodiments, the solvent is an organic solvent;

In some embodiments, the organic solvent comprises an alcohol-based solvent;

In some embodiments, the alcohol-based solvent comprises at least one of methanol, ethanol, ethylene glycol, propanol, isopropanol, glycerol, n-butanol, isobutanol, and pentanol;

In some embodiments, the mixture is subjected to a drying treatment to obtain the precursor;

In some embodiments, the drying treatment is performed at 40 °C-300 °C for 1 h-15 h;

In some embodiments, the method for preparing the mixture specifically comprises : sonicating the active material, the first carbon source, and the solvent, followed by a grinding process;

In some embodiments, the ultrasonic treatment is performed for 15 min -45 min;

In some embodiments, the grinding process is performed for 3 h-8 h.

In some embodiments, the mixture further comprises a metal oxide;

In some embodiments, the metal oxide has a chemical formula of MₓO_{y}, wherein 0.2 ≤ y/x ≤ 3, and M comprises at least one of Sn, Ge, Fe, Cu, Ti, Na, Mg, Al, Ca, and Zn;

In some embodiments, the metal oxide is in a form of a sheet and/or a long strip;

In some embodiments, the metal oxide having an aspect ratio greater than 2;

In some embodiments, a mass ratio of the active material, the metal oxide and the first carbon source is (15-120): (1-20): (10-50).

According to the invention, the mixture further comprises an electrical conductivity enhancer;

According to the invention, the conductive enhancer comprises at least one of an alloy material and a conductive carbon;

In some embodiments, the alloy material and a conductive carbon, and the alloy material comprising at least one of a zinc alloy, an aluminum alloy, a copper alloy, a silicon alloy, a nickel alloy, and a titanium alloy;

According to the invention, the conductive carbon comprises one of graphite fibers, carbon nanotubes, graphite sheets, conductive carbon fibers, and graphene;

According to the invention, the conductivity enhancer has a conductivity of 10⁰ S/m to 10⁸ S/m;

According to the invention, the conductive enhancer is in a form of a sheet and/or a long strip;

According to the invention, the conductive enhancer has an aspect ratio of 2:1-5000:1;

In some embodiments, the conductivity enhancer has a mass ratio of (0.1-10): 100.

In some embodiments, the mixture further comprises an additive;

In some embodiments, the additive comprises at least one of a surfactant and a coupling agent;

In some embodiments, the surfactant comprises at least one of n-octadecanoic acid, lauric acid, polyacrylic acid, sodium dodecyl benzene sulfonate, n-eicosanoic acid, palmitic acid, tetradecanoic acid, undecanoic acid, cetyltrimethylammonium bromide, and polyvinylpyrrolidone;

In some embodiments, the silane coupling agent comprises at least one of γ-aminopropyltriethoxysilane, γ-glycidoxypropyltrimethoxysilane, and γ-methacryloxypropyltrimethoxysilane;

In some embodiments, a mass ratio of the active material, the metal oxide, the additive and the first carbon source is (15-120): (1-20): (1-10): (10-50).

In some embodiments, the densification process comprises: peforming a fusion process on the precursor, followed by a primary heat treatment;

In some embodiments, the fusion process comprises mechanical fusion;

In some embodiments, a rotational speed of the fusion machine is 500 r/min-3000 r/min;

In some embodiments, a blade gap is 0.01 cm-0.5 cm during the mechanical fusion;

In some embodiments, the mechanical fusion is performed for at least 0.5 h;

In some embodiments, the primary heat treatment comprises a primary carbonization treatment;

In some embodiments, the primary carbonization treatment has a temperature of 500 °C-1200 °C for 1 h-10 h;

In some embodiments, the primary carbonization treatment is conducted under a protective gas condition, the protective gas comprises at least one of nitrogen, helium, neon, argon, and krypton;

In some embodiments, the primary heat treatment further comprises a secondary carbonization treatment which is performed after the fusion process;

In some embodiments, the secondary carbonization treatment comprises at least one of a vapor phase coating, a solid phase coating, and a liquid phase coating.

In some embodiments, a carbon coating process is performed on the aggregate;

In some embodiments, the carbon coating process comprises: mixing the aggregate with a second carbon source, followed by a secondary heat treatment;

In some embodiments, the second carbon source comprises at least one of sucrose, glucose, polyethylene, polyvinyl alcohol, polyethylene glycol, polyaniline, epoxy resin, phenolic resin, furfun resin, acrylic resin, polyethylene oxide, polyvinylidene fluoride, polyacrylonitrile, polyvinyl chloride, and asphalt;

In some embodiments, a mass ratio of the aggregate to the second carbon source is (10-100): (10-70);

In some embodiments, the secondary heat treatment is performed at a temperature of 600 °C to 1200 °C for 1 h-10 h;

In some embodiments, the secondary heat treatment is performed under a protective gas condition, and the protective gas comprises at least one of nitrogen, helium, neon, argon, and krypton.

A lithium ion battery, wherein lithium ion battery comprises the negative electrode material as described or a negative electrode material prepared by the method as described above.

### BRIEF DESCRIPTION OF DRAWINGS

To describe the technical solutions in the embodiments of the present disclosure more clearly, the following briefly describes the accompanying drawings required to be used in the embodiments. It is to be understood that the following drawings merely illustrate embodiments of the disclosure, the scale shown in the drawing does not correspond directly to the actual scale of the embodiments, and the following drawings show only some of the embodiments disclosed, therefore should not to be considered to limit the scope of the present disclosure.
FIG. 1 is a flow chart of a method for preparing a negative electrode material according to an embodiment of the present disclosure;
FIG. 2 is a scanning electron microscope (SEM) picture of a negative electrode material prepared in accordance to Example 1 of the present disclosure;
FIG. 3 is an XRD pattern of a negative electrode material prepared in accordance to Example 1 of the present disclosure;

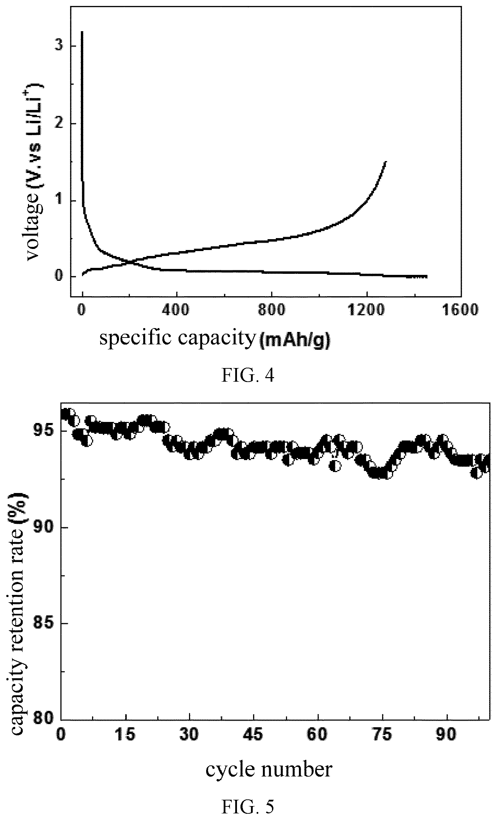

FIG. 4 is a graph of first charging and discharging of a negative electrode material prepared in accordance with Example 1 of the present disclosure;
FIG. 5 is a graph of cycling performance of a negative electrode material prepared in accordance with Example 1 of the present disclosure.

### DESCRIPTION OF EMBODIMENTS

Advantages of embodiments in the summary will be set forth in part in the following description, and part of the advantages will be obvious from the description, or may be obtained by embodiments of the disclosure.

The technical solution of the present disclosure will be further illustrated below with reference to the attached drawings and examples.

In order to make the purpose, technical solution and advantages of this disclosure clearer, this disclosure will be further explained below in detail with reference to the drawings and examples. It should be understood that the embodiments described herein are only for explaining the present disclosure, and are not intended to limit the present disclosure.

In an embodiment of the present disclosure, it provides a negative electrode material with excellent structural stability, effective to suppress the volume expansion of negative electrode material, improve cycle performance of the battery. Another embodiment provides a preparation method of negative electrode material described above, which can reduce manufacturing costs. Yet another embodiment provides lithium ion battery.

The negative electrode material of the present invention includes an aggregate, the aggregate comprising an active material and a carbon material, wherein the aggregate has a porosity of ≤ 10% and the aggregate has a compressive hardness of ≧ 100 MPa, as defined in claim 1.

In this embodiment, negative electrode material includes an aggregate, and a porosity of the aggregate is relatively low, that is, a solidity of the aggregate is high. In one aspect, it facilitates to increase the energy density of the composite material, on the other hand, for a high solidity material, even if a carbon layer of the aggregate surface of the skin layer is breached, the electrolyte does not readily penetrate into an interior of the aggregate, which facilitates protecting active material particles in the interior, and reduces a probability of contact between the electrolyte and the active material, thereby facilitating the formation of a stable solid electrolyte membrane. In addition, high densification aggregates have a high compressive hardness, counteracts stress effects due to the expansion, improves structural stability of negative electrode material, effectively suppress expansion of the negative electrode material, reduce expansion rates, and improve battery cycle performance.

The porosity of the aggregate of is ≤ 10%, the porosity of the aggregate may be 1%, 1.5%, 2%, 2.5%, 3%, 3.5%, 4%, 4.5%, 5%, 5.5%, 6%, 6.5%, 7%, 7.5%, 8%, 8.5%, 9%, or 9.5%, and so on, and other values within the above range described above may also be used herein without limitation. It should be understood that the porosity of the aggregate is low, that is, the solidity is high, which facilitates the formation of a stable solid electrolyte membrane, while reducing the electrolyte's contact with the active material. In one embodiment, the porosity of the aggregate is ≤ 5%. In one embodiment, the porosity of the aggregate is ≤ 3%.

The aggregate has a compressive hardness of ≧ 100 MPa, the compressive hardness of the aggregate can be 100 MPa, 200 MPa, 250 MPa, 300 MPa, 400 MPa, 450 MPa, 500 MPa, 600 MPa, 750 MPa, 800 MPa, 900 MPa, 1000 MPa, 1150 MPa, 1200 MPa, or 1250 MPa, and the like, and other values within the ranges described above can also be used herein without limitation. As the aggregate has strong rigidity, the structural stability of particles thereof is strong, and can resist certain volume expansion stress, thereby reducing expansion effect, and improving battery cycling stability. In one embodiment, the aggregate has a compressive stiffness of ≧ 200 MPa. In one embodiment, the aggregate has a compressive hardness of ≧ 400 MPa.

In some embodiments, the active material refers to a substance that can react with lithium to deintercalate lithium. The active material includes at least one of an oxide of silicon, a non-metal element, an elemental metal, and an alloy of elemental metal and silicon.

In some embodiments, the elemental metal includes at least one of Li, Na, K, Sn, Ge, Fe, Mg, Ti, Zn, Al, and Cu.

In some embodiments, the non-metal elements include at least one of Si and P.

In some embodiments, the oxide of silicon includes SiOx, wherein 0 < x ≤ 2.

In some embodiments, the elemental metal and the alloy of silicon include at least one of a silicon lithium alloy, a silicon sodium alloy, a silicon potassium alloy, a silicon tin alloy, a silicon germanium alloy, a silicon iron alloy, a silicon magnesium alloy, a silicon titanium alloy, silicon-zinc alloy, a silicon aluminum alloy, and a silicon copper alloy.

In some embodiments, the active material has a median particle size ranging from 1 nm to 500 nm. The specific values may be 1 nm, 5 nm, 10 nm, 15 nm, 20 nm, 30 nm, 40 nm, 50 nm, 100 nm, 200 nm, 300 nm, 400 nm, or 500 nm, etc., and may be other values within the ranges described above, which is not limited herein. Through multiple experiments, it was found that the active material particles in nanoscale have stable structure, and can inhibit silicon volume expansion. However, due to the larger surface energy of the nanoscale active particles, agglomeration is easy to occur during charging and discharging processes, and the particle size of the active material is too small, the production process cost is high. In one embodiment, the active material has a median particle size from 1 nm to 200 nm. In one embodiment, the active material has a median particle size from 1 nm to 100 nm.

In some embodiments, the carbon material includes at least one of amorphous carbon, crystalline carbon, and mesocarbon microbeads. In some embodiments, the amorphous carbon includes at least one hard carbon and soft carbon. As can be understood, the carbon material can improve the conductivity of the aggregate, reduce the porosity of the aggregate, and enable the aggregate to be more densified.

In some embodiments, a mass ratio of the active material to the carbon material is (30-70): (10-70). The mass ratio of the active material to the carbon material is specifically 30: 10, 30: 40, 30: 50, 30: 70, 40: 10, 40: 50, 40: 70, 50: 30, 50: 60, 60: 10, 60: 50, 70: 10, 70: 40, or 70: 70, among others, although other values within the ranges described above may be used herein without limitation.

In some embodiments, the aggregate density satisfies the following relationship: The difference between the test density of the aggregate and the theoretical density of the aggregate is ≤ 5%. If the test density of the aggregate is closer to the theoretical density, it indicates that the less pores are located inside the particles, and the aggregate is more dense, which is advantageous to form a stable solid electrolyte membrane, and reduce the contact of the electrolyte with the active material. In particular, the aggregate density satisfies the following relationship: (ρ2-ρ1)/ρ2 ≤5%, where ρ1 is a test density of the aggregate, ρ2 is a theoretical density of the aggregate, and ρ2 is a sum of the mass percent of each component in the aggregate * the value of the theoretical density of each component in the aggregate. In a specific example, when the aggregate comprises an active material and a carbon material, ρ2 = percent of mass of the active material in the aggregate * theoretical density of active material + percent of mass of the carbon material in the aggregate * theoretical density of carbon material.

In some embodiments, the aggregate further comprises a metal oxide. When the metal oxide is compounded with the active material, it can reduce expansion of the active material, promote long cycle performance, and the aggregate has a higher compressive hardness. In one embodiment, when the aggregate further comprises a metal oxide, the aggregate has a compressive hardness of ≧ 150 MPa, further, the aggregate has a compressive hardness of ≧ 200 MPa, and still further, the aggregate has a compressive hardness of ≧ 400 MPa. It is noted that a theoretical density of the aggregate ρ2 = percent of mass of the active material in the aggregate * theoretical density of active material + percent of mass of the metal oxide in the aggregate * theoretical density of the metal oxide theoretical density + the theoretical density of carbon material in the aggregate * theoretical density of carbon material in the aggregate.

In some embodiments, in the aggregate, a metal oxide is distributed in the active material, and a carbon material is filled between the active material and the metal oxide. Specifically, there are pores located between the active material and the metal oxide, and the pores are filled with carbon material. As can be understood, the pore structure is formed by the active material and the metal oxide, such that the carbon material fills the pores, which can improve the structural stability of the aggregates, resist certain volume expansion stress, and reduce expansion.

In some embodiments, the metal oxide has a chemical formula of M ₓ O _{y}, 0.2 ≤ y/x ≤ 3, where M comprises at least one of Sn, Ge, Fe, Cu, Ti, Na, Mg, Al, Ca, and Zn. In particular, the metal oxide may be GeO₂, SnO₂, ZnO, TiO₂, Fe ₃ O ₄, MgO, SiO₂, and CuO, or the like. In the present solution, the rate of change of the selected metal oxide in the lithiation and delithiation process is lower than the active material, and thus, if the metal oxide is compounded with the active material, it can reduce the expansion of the active material, and improve long cycle performance.

In some embodiments, the metal oxide is in the form of a sheet and/or a long strip.

In some embodiments, the metal oxide has an aspect ratio greater than 2. It is to be noted that when the metal oxide is in the form of a long strip, the aspect ratio specifically refers to the ratio of the length to particle size of the metal oxide, where the particle size refers to the maximum linear distance between two points on the peripheral edge perpendicular to the length of the elongated conductive enhancer; when the metal oxide is in a form of a sheet, the aspect ratio specifically refers to the ratio of the length to the width of the sheet metal oxide. Specifically, the metal oxide may have an aspect ratio of 2, 2.5, 3, 3.5, 4, 4.5, 5, 6, 7, 8, 9, 10, 11, 12, 13, 14, 15, 16, 17, 18, 19, 20, 21, 22, etc. , and other values within the ranges described above may also be used herein without limitation. According to a number of experiments, it is found that when the aspect ratio of the metal oxide is greater than 2, the physical bonding force of the metal oxide to the active material can be enhanced, improving the network structure formed by both, thereby buffering the volume expansion variation of the active material, improving cycle performance.

In some embodiments, a mass ratio of active material and metal oxides is (30-70): (1-20). Specifically, the mass ratio of active material and metal oxides is 30: 5, 30: 15, 30: 20, 40: 5, 40: 15, 40: 20, 50: 10, 50: 20, 60: 10, 60: 25, or 70: 20, and other values within the ranges described above may also be used herein without limitation. If the metal oxide content is too high, it causes the first efficiency of the material to decrease, if the metal oxide content is too low, it decreases the rigidity of the aggregate structure, and the particle circulation stability decreases.

According to the invention, the aggregate further comprises an electrical conductivity enhancer. On one hand, the conductive enhancer may provide more carrier transport channels, thereby enhancing carrier transport inside the material; on the other hand, the conductive enhancer also provides excellent mechanical properties, which may enhance the stability of the material as a support for the structure.

In one embodiment, the aggregate has a compressive hardness of ≧ 150 Mpa. In one embodiment, the aggregate has a compressive hardness of ≧ 200 Mpa. In one embodiment, the aggregate has a compressive hardness of ≧ 400 Mpa. It is noted that the theoretical density of the aggregate ρ2 =the mass percent of the active material in aggregate * theoretical density of active material + the mass percent of the metal oxide in aggregate * theoretical density of metal oxide+ mass percent of carbon material in the aggregate * theoretical density of carbon material + mass percent of conductivity enhancer * theoretical density of conductivity enhancer.

The conductive enhancer comprises at least one of an alloy material and a conductive carbon.

In some embodiments, the alloy material includes at least one of a zinc alloy, an aluminum alloy, a copper alloy, a silicon alloy, a nickel alloy, and a titanium alloy.

According to the invention, the conductive carbon includes one of graphite fibers, carbon nanotubes, graphite sheets, conductive carbon fibers, and graphene.

According to the invention, a conductivity of the conductive enhancer is 10⁰ S/m to 10⁸ S/m. The conductivity of the conductive enhancer is 10 S/m, 100 S/m, 1000 S/m, 10⁴ S/m, 10⁵ S/m, 10⁶ S/m, or 10⁷ S/m, and other values within the ranges described above may also be used herein without limitation. In some embodiments, the conductive enhancer is in the form of a sheet and/or a long strip.

According to the invention, the conductive enhancer has an aspect ratio of 2 to 5000. It is noted that when the conductive enhancer is in a form of a long strip, the aspect ratio specifically refers to the ratio of the length of the conductive enhancer particles to the particle size of the particles, the particle size herein refers to the maximum linear distance between two points on the peripheral edge perpendicular to the length of the elongated conductive reinforcing agent; when the conductive enhancer is in a form of a sheet, the aspect ratio specifically refers to the ratio of the length to the width of the sheet conductive enhancer. In particular, the aspect ratio of the conductive enhancer may be 2, 5, 10, 15, 20, 33, 50, 60, 70, 80, 90, 100, 150, 600, 780, 890, 1300, 1500, 2000, 3000, 4000, 5000, etc. , and other values within the ranges described above may also be used herein without limitation. It has been found according to a number of experiments that the conductive enhancer in this range has superior mechanical properties, and can serve as a support for the structure to enhance the stability of the material, thereby buffering the change in volume expansion of the active material, and improving cycling performance.

In some embodiments, a mass ratio of the conductive enhancer to the active material is (0.1-10): 100. The mass ratio of the conductive enhancer to the active material is specifically 0.1: 100, 0.5: 100, 1: 100, 2: 100, 2.6: 100, 3: 100, 3.5: 100, 4: 100, 4.8: 100, 6: 100, 7: 100, 8.5: 100, or 10: 100, and the like. Certainly, other values within the above ranges may also be used, and are not limited herein.

In some embodiments, negative electrode material further includes a carbon layer coated on at least part of the surface of the aggregate. It is noted that the surface of the aggregate may be partially or entirely covered by the carbon layer. In some embodiments, the coating rate of the carbon layer of the aggregate surface is from 1% to 100%. It is noted that the coating rate in the present disclosure refers to the extent to which the aggregate surface is covered by the carbon layer. The coating rate is specifically 1%, 5%, 10%, 20%, 25%, 30%, 35%, 40%, 45%, 50%, 55%, 60%, 65%, 70%, 75%, 80%, 85%, 90%, or 95%. Certainly other values within the above ranges may also be used, and are not limited herein.

In some embodiments, the carbon layer includes amorphous carbon.

In some embodiments, the carbon layer has a thickness of 10 nm to 1500 nm. As can be understood, the carbon layer coating the surface of the aggregate is capable of reducing contact of the active material with the electrolyte, reducing the production of the passivation film, and increasing a reversible capacity of the battery. The thickness of the carbon layer is, in particular, 10 nm, 50 nm, 180 nm, 200 nm, 350 nm, 400 nm, 550 nm, 700 nm, 850 nm, 900 nm, 1050 nm, 1200 nm, or 1500 nm, and so on, and other values within the ranges described above may also be used herein without limitation. If the carbon layer is too thick and the proportion of carbon is too high, it is not conducive to achieving a high specific capacity composite; If the carbon layer is too thin, it is not conducive to increasing the conductivity of negative electrode material and the capability for inhibiting the volume expansion of the material is weak, resulting in a long cycle performance difference. In one embodiment, the carbon layer has a thickness of 50 nm to 800 nm. In one embodiment, the carbon layer has a thickness of 100 nm to 500 nm.

In some embodiments, the negative electrode material has a median particle size of 0.5 µm to 30 µm. The negative electrode material has a median particle size of specifically 0.5 µm, 1 µm, 5 µm, 8 µm, 10 µm, 13 µm, 15 µm, 18 µm, 20 µm, 25 µm, or 30 µm, or the like, and other values within the ranges described above may also be used herein without limitation. It is to be understood that the median particle size of negative electrode material is controlled within the range described above, which facilitates to improve cycling performance of the negative electrode material

In some embodiments, the specific surface area of negative electrode material is ≤ 10m ^{2/}g. The specific surface area of negative electrode material is specifically 0.5m ^{2/}g, 1m ^{2/}g, 2m ^{2/}g, 3m ^{2/}g, 5m ^{2/}g, 7m ^{2/}g, 8m ^{2/}g, or 10m ^{2/}g, and so on, and other values within the ranges described above may also be used herein without limitation. It is to be understood that the specific surface area of negative electrode material is controlled within the range described above, which facilitates to inhibits volume expansion, and improve negative electrode negative electrode material performance.

The median particle size described in this disclosure refers to the average particle size, which is tested by a Malvern particle size meter. The Malvern particle size meter uses the scattering phenomenon of the light to comprehensively synthesize the particle size distribution of the particles under test according to the distribution of the scattered light energy.

It is to be noted that the negative electrode materials of the various embodiments described above may be combined in any combination, such as the compressive hardness, porosity and density of the aggregates, and the like without contradiction.

In an embodiment, it provides a method for preparing the negative electrode material, comprising the steps of:
step S10, a precursor is prepared from a mixture of an active material, a first carbon source, and a solvent;
step S20, the precursor is densified to obtain aggregates, the aggregate having a porosity of ≤ 10% and a compressive hardness of ≧ 100 MPa;
step S30, the aggregate is subjected to a carbon coating process to obtain negative electrode material.

The method for preparing the negative electrode material provided by the present disclosure utilizes a densification treatment of the precursor, which increases the compressive hardness of the negative electrode material, enhances the stability of the particle structure, while enhancing the stability of the connection between the active material and the first carbon source, and reducing the porosity, thereby causing the expansion rate of the negative electrode material to decrease, and increasing the cycle stability.

The method for preparinng the negative electrode material of the present disclosure are described in detail below in combination with the following embodiments:
S10, a precursor is prepared from a mixture of an active material, a first carbon source, and a solvent.

In some embodiments, the first carbon source includes at least one of sucrose, glucose, polyethylene, polyvinyl alcohol, polyethylene glycol, polyaniline, epoxy resin, phenolic resin, furfun resin, acrylic resin, polyethylene oxide, polyvinylidene fluoride, polyacrylonitrile, polyvinyl chloride, and asphalt.

In some embodiments, the active material refers to a substance that can react with lithium to deintercalate lithium. The active material includes at least one of an alloy of elemental metal with silicon, an oxide of silicon, an elemental metal, and a non-metal element. In some embodiments, the elemental metals include at least one of Li, Na, K, Sn, Ge, Fe, Mg, Ti, Zn, Al, and Cu. In some embodiments, the non-metal elements include at least one of Si and P. In some embodiments, the oxide of silicon includes SiOx, wherein 0 < x ≤ 2. In some embodiments, the alloy of elemental metals with silicon includes at least one of a silicon lithium alloy, a silicon sodium alloy, a silicon potassium alloy, a silicon tin alloy, a silicon germanium alloy, a silicon iron alloy, a silicon magnesium alloy, a silicon titanium alloy, silicon-zinc alloy, a silicon aluminum alloy, and a silicon copper alloy.

In some embodiments, a mass ratio of the active material to the first carbon source is (15-120): (10-50). Specifically, the mass ratio of the active material to the first carbon source is 100: 15.9, 100: 21.9, 100: 24.5, 100: 9.5, 100: 9.5, 100: 9.5, 100: 9.5, or 100: 9.5, and the like, and other values within the ranges described above may also be used herein without limitation.

In some embodiments, the mixing method of the mixture may include magnetic stirring, mechanical stirring, ultrasonic dispersion, milling dispersion, and the like. The milling dispersion can be employed such that the active material can be dispersed, avoiding agglomeration of the active material, and may allow the active material to be dispersed into smaller nanoparticles.

In some embodiments, the preparation method of the mixture specifically includes sonicating the active material, the first carbon source, and the solvent, and performing a grinding process. In some embodiments, the time of ultrasonic treatment is 15-45 min. Specifically, the time of ultrasonic treatment can be 20 min, 25 min, 30 min, 35 min, or 40 min, etc., and other values within the ranges described above may also be used herein without limitation. In some embodiments, the time of the grinding process is 3-8 h. The time of the grinding process is particularly 4 h, 5 h, 6 h, or 7 h, etc., and other values within the ranges described above may also be used herein without limitation. The component can be mixed to be more uniform by sufficient grinding.

Specifically, the active material, the first carbon source, and the solvent are mixed to obtain a precursor solution, and the precursor solution is wet ball milled such that the particle size of particle in precursor solution reaches between 1 nm and 500 nm. The particle size of particle in precursor solution can be specifically 1 nm, 5 nm, 10 nm, 15 nm, 50 nm, 100 nm, 150 nm, 200 nm, 300 nm, 400 nm, or 500 nm, etc., which is not limited herein.

In some embodiments, the solvent comprises organic solvent. In some embodiments, the organic solvent comprises an alcohol-based solvent, the alcohol-based solvent includes at least one of methanol, ethanol, ethylene glycol, propanol, isopropanol, glycerol, n-butanol, isobutanol, and pentanol. The addition of the various components to organic solvent for wet ball milling, can improve the mixing uniformity of components, and is conducive to rapid drying.

In some embodiments, the mixture is subjected drying treatment to obtain precursor. In some embodiments, the drying treatment has a temperature between 40 °C and 300 °C and drying treatment has a time of 1h to 15h. The temperature of drying treatment is specifically 50 °C, 70 °C, 100 °C, 120 °C, 150 °C, 200 °C, 220 °C, 250 °C, etc., and other values within the ranges described above may also be used herein without limitation. The time of drying treatment is specifically 1.5h, 2h, 2.5h, 3h, 4h, 5h, 6h, 7h, 8h, 9h, 10h, 11h, 12h, 13h, or 14h, etc. , and other values within the ranges described above may also be used herein without limitation. Drying treatment may be, for example, in-furnace drying, freeze drying, blending drying, spray drying, and the like, and drying treatment in this embodiment may remove the solvent in precursor solution as much as possible.

In some embodiments, a metal oxide is also included in the mixture. In some embodiments, the metal oxide has chemical formula of MₓO_{y}, 0.2 ≤ y/x ≤ 3, where M comprises at least one of Sn, Ge, Fe, Cu, Ti, Na, Mg, Al, Ca, and Zn. The metal oxide may be GeO₂ , SnO₂ , ZnO, TiO₂, Fe₃O₄, MgO, SiO₂, CuO, and the like.

In some embodiments, the metal oxide is in a form of a sheet and/or a long strip.

In some embodiments, the metal oxide has an aspect ratio greater than 2. It is noted that when the metal oxide is in a form of a long strip, the aspect ratio specifically refers to the ratio of the length of the particle to particle size of the particle; when the metal oxide is in the form of a sheet, the aspect ratio specifically refers to the ratio of the length to the width of the sheet metal oxide. Specifically, the aspect ratio of metal oxides may be 2, 2.5, 3, 3.5, 4, 4.5, 5, 6, 7, 8, 9, 12, 15, 17, 18, or 22, or the like, and other values within the ranges described above may also be used herein without limitation. According to the multiple experiments, it was found that when an aspect ratio of the metal oxide is less than or equal to 2, by controlling the aspect ratio of the metal oxide, the physical bonding force of the metal oxide to the active material can be increased, which improves the network structure formed by both, thereby better buffering the volume expansion change of the active material, and improving cycle performance.

In some embodiments, a mass ratio of the active material, the metal oxide to the first carbon source is (15-120): (1-20): (10-50). Specifically, the mass ratio of the active material, the metal oxide to the first carbon source may be 15: 1: 10, 20: 3: 25, 50: 8: 35, 60: 9: 38, 70: 11: 45, 90: 15: 40, 100: 9: 15.9, 100: 5: 21.9, 100: 2: 24.5, 100: 9: 19.5, 100: 9: 19.5, 100: 9: 19.5, 100: 11: 19.5, 100: 9.5: 19.5, etc., and other values within the ranges described above may also be used herein without limitation.

According to the invention, the mixture further includes an electrical conductivity enhancer.

In one embodiment, an electrical conductivity enhancer is added to the step of mixing the active material, the first carbon source, and the solvent. According to the invention, the conductive enhancer comprises at least one of an alloy material and a conductive carbon.

In some embodiments, the alloy material includes at least one of a zinc alloy, an aluminum alloy, a copper alloy, a silicon alloy, a nickel alloy, and a titanium alloy.

According to the invention, the conductive carbon comprises one of graphite fibers, carbon nanotubes, graphite sheets, conductive carbon fibers, and graphene.

According to the invention, the conductivity of the conductive enhancer is 10⁰S/m to 10⁸S/m. The conductivity of the conductive enhancer may be 1 S/m, 10 S/m, 100 S/m, 10³S/m, 10⁴ S/m, 10⁵ S/m, 10⁸ S/m, or the like, and other values within the ranges described above may also be used herein without limitation. In some embodiments, the conductive enhancer is in a form of a sheet and/or a long strip. In some embodiments, the conductivity enhancer has an aspect ratio of 2 to 5000. In particular, an aspect ratio of the conductive enhancer may be 2, 5, 10, 15, 20, 33, 50, 60, 70, 80, 90, 100, 150, 600, 780, 890, 1300, 1500, 2000, 3000, 4000, 5000, etc. , and other values within the ranges described above may also be used herein without limitation.

In some embodiments, the mass ratio of the conductive enhancer to the active material is (0.1-10): 100. Specifically, a mass ratio of the conductive enhancer to the active material is 0.1: 100, 0.5: 100, 1: 100, 2: 100, 2.6: 100, 3: 100, 3.5: 100, 4: 100, 4.8: 100, 6: 100, 7: 100, 8.5: 100, or 10: 100, and the like, and other values within the ranges described above may also be used herein without limitation.

In some embodiments, additives are also included in the mixture. The additives in this embodiment may be effective to enhance the connection stability of active material and the carbon material, thereby forming a strong system. In some embodiments, the additive includes at least one of a surfactant or a coupling agent. Through the experiments, it has been found that employing an additive of the described above is effective in enhancing the connection stability of the active material and the carbon material to form a strong system, reducing porosity, such that an expansion rate of the negative electrode material is reduced, and cycling stability is increased.

In some embodiments, the surfactant includes, but not limited to, at least one of n-octadecanoic acid, lauric acid, polyacrylic acid (PAA), sodium dodecyl benzene sulfonate (SDBS), n-eicosanoic acid, palmitic acid, tetradecanoic acid, undecanoic acid, cetyltrimethylammonium bromide, and polyvinylpyrrolidone (PVP).

In some embodiments, the silane coupling agent include, but not limited to, at least one of γ-aminopropyltriethoxysilane, γ-glycidoxypropyltrimethoxysilane, and γ-methacryloxypropyltrimethoxysilane.

In some embodiments, a mass ratio of the active material, the metal oxide, the additive to the first carbon source is (15-120): (1-20): (1-10): (10-50). The mass ratio of the active material, the metal oxide, the additive to the first carbon source is specifically 100: 9: 5.9: 15.9, 100: 5: 8: 21.9, 100: 2: 5: 24.5, 100: 9: 5: 19.5, 100: 9: 11: 19.5, 100: 9: 10.5: 19.5, 100: 11: 5.5: 19.5, 100: 9.5: 6.9: 19.5, and the like, and other values within the ranges described above may also be used herein without limitation.

Step S20, a densification treatment of precursor can be made to obtain an aggregate, and the aggregate has a porosity of ≤ 10% and a compressive hardness of ≧ 100 MPa.

In some embodiments, the densification process includes subjecting precursor to a fusion process, followed by a heat treatment. After fusion treatment of the precursor to improve the compressive hardness of the negative electrode material, followed by a heat treatment, enhancing the stability of the particle structure, while enhancing the connection stability of the active material and the first carbon source, reducing porosity. Certainly, in other embodiments, other methods may also be employed for densification process, such as embossing, isostatic pressing, dipping, etc. , so long as the porosity of the aggregate is made ≤ 10% and a compressive hardness is ≧ 100 MPa.

In some embodiments, the fusion process is mechanical fusion. Through the fusion process, the connection of the active material and the carbon material may be effectively enhanced, reducing pores between each other, improving densification. In some embodiments, a speed of the fusion machine used for mechanical fusion is 500 r/min to 3000 r/min, 500 r/min, 1000 r/min, 1500 r/min, 2000 r/min, 2500 r/min, or 3000 r/min, and so on, and other values within the ranges described above may also be used herein without limitation. The blade gap width of fusion machine is 0.01 cm to 0.5 cm, specifically 0.01 cm, 0.05 cm, 0.1 cm, 0.15 cm, 0.2 cm, 0.25 cm, 0.3 cm, or 0.5 cm, and so on, and other values within the ranges described above may also be used herein without limitation. The time of mechanical fusion is at least 0.5 h, specifically 0.5 h, 0.8 h, 0.9 h, 1.0 h, 1.5 h or 2 h, and so on, and other values within the ranges described above may also be used herein without limitation.

In some embodiments, the primary heat treatment includes a primary carbonization treatment.

In some embodiments, the fusion treated mixture is fed into a high temperature box furnace for a carbonization treatment such that the first carbon source is carbonized, and the active and carbon materials are intimately connected together. The primary carbonization treatment may be, for example, atmospheric firing, vacuum firing, or hot press firing.

In some embodiments, the temperature of the primary carbonization treatment is from 500 °C to 1200 °C and the time for the carbonization treatment is from 1 h to 10 h. The temperature of the primary carbonization treatment is specifically 500 °C, 600 °C, 700 °C, 800 °C, 900 °C, 1000 °C, 1100 °C, 1200 °C, etc., and other values within the ranges described above may also be used herein without limitation. The time for the primary carbonization treatment is specifically 1 h, 2 h, 3 h, 4 h, 5 h, 6 h, 7 h, 8 h, 9 h, or 15 h, etc., and other values within the ranges described above may also be used herein without limitation.

A temperature ramp rate of the primary carbonization treatment is from 1°C/min to 30°C/min. The specific may be 1°C/min, 5°C/min, 10°C/min, 15°C/min, 20°C/min, 25°C/min or 30°C/min, and so on, and other values within the ranges described above may also be used herein without limitation.

In one embodiment, the heat treatment has a temperature ramp rate of 1 °C/min to 15°C/min.

In some embodiments, the primary carbonization treatment is conducted under a protective gas condition, the protective gas comprising at least one of nitrogen, helium, neon, argon, and krypton.

In some embodiments, the primary heat treatment also includes a secondary carbonization treatment that is performed after the fusion process. The secondary carbonization treatment is performed after fusion treatment and before primary carbonization treatment, or the secondary carbonization treatment is performed after the primary carbonization treatment. The secondary carbonization treatment may further reduce the porosity of the material.

In some embodiments, the secondary carbonization treatment includes at least one of a vapor phase coating, a solid phase coating, and a liquid phase coating. In some embodiments, a reaction temperature of the solid phase coating is from 500 °C to 1200 °C, specifically including, but not limited to, 600 °C, 700 °C, 800 °C, 850 °C, 900 °C, 950 °C, 1000 °C, 1050 °C, 1100 °C, 1150 °C, and the like, with a reaction time of 1 h to 12 h, including but not limited to, 2 h, 3 h, 4 h, 5 h, 6 h, 7 h, 8 h, 9 h, 10 h, 11 h, and the like. In some embodiments, the reaction temperature of the liquid phase coating is from 500 °C to 1200 °C, specifically including, but not limited to, 600 °C, 700 °C, 800 °C, 850 °C, 900 °C, 950 °C, 1000 °C, 1050 °C, 1100 °C, 1150 °C, and the like, with a reaction time of 1h to 12 h, specifically including, but not limited to, 2 h, 3 h, 4 h, 5 h, 6 h, 7 h, 8 h, 9 h, 10 h, 11 h, and the like.

In some embodiments, vapor phase coating includes chemical vapor deposition, chemical vapor deposition has a reaction temperature of 600 °C to 1050 °C, specifically 600 °C, 700 °C, 800 °C, 850 °C, 900 °C, 950 °C, 1000 °C, or 1050 °C, and the like, and other values within the ranges described above may also be used herein without limitation. The time of chemical vapor deposition is 0.5 h to 2 h, specifically 0.5 h, 0.8 h, 1.0 h, 1.5 h, 1.8h or 2 h, or the like, and other values within the ranges described above may also be used herein without limitation.

It will be understood that by chemical vapor deposition, the decomposition of the carbon source gas into a single carbon atom radicals in zero dimension or a shorter carbon chain in one dimension, stacking may contribute to a tighter structure, which is conducive to forming aggregates of dense structures, and facilitating complete and structural stability of the material conductive network, facilitating improved cycling stability of the negative electrode material.

In one embodiment, the chemical vapor deposition has a reaction temperature of 800 °C to 1000 °C

In some embodiments, the carbon source gas in the chemical vapor deposition process includes at least one of methane, ethylene, acetylene, benzene, toluene, xylene, styrene, and phenol.

Step S30, the aggregate is subjected to a carbon coating process to obtain the negative electrode material.

It should be noted that the negative electrode material of the present embodiment may not be carbon coated, therefore, step S30 may be omitted.

In some embodiments, the carbon coating process includes mixing the aggregate with a second carbon source, followed by a secondary heat treatment.

In some embodiments, the second carbon source comprises at least one of sucrose, glucose, polyethylene, polyvinyl alcohol, polyethylene glycol, polyaniline, epoxy resin, phenolic resin, furfun resin, acrylic resin, polyethylene oxide, polyvinylidene fluoride, polyacrylonitrile, polyvinyl chloride, and asphalt.

In some embodiments, the aggregate has particle size of 0.5 µm to 15 µm, specifically 0.5 µm, 1 µm, 2 µm, 3 µm, 4 µm, 5 µm, 6 µm, 7 µm, 8 µm, 10 µm, 12 µm, or 15 µm, or the like, and other values within the ranges described above may also be used herein without limitation. Controlling the particle size within the ranges set forth above facilitates obtaining a products with high compressive hardness. After the experiment, it was found that the particles of the aggregate are too large, which will result in a low degree of densification, a tight connection, and a small compressive hardness.

In some embodiments, a mass ratio of the aggregate to the second carbon source is (10-100): (10-70). Specifically, the mass ratio of the aggregate to the second carbon source is 10: 20, 20: 10, 100: 25, 100: 35, 100: 45, 100: 55, 100: 65, and the like, and other values within the ranges described above may also be used herein without limitation.

In some embodiments, the mixing method of the aggregate and the second carbon source may include magnetic stirring, mechanical stirring, ultrasonic dispersion, milling dispersion, and the like.

In some embodiments, the secondary heat treatment may be, for example, atmospheric firing, vacuum firing, or hot press firing.

In some embodiments, a temperature of the secondary heat treatment ranges from 600 °C to 1200 °C, the time for the secondary heat treatment is from 1h to 10h., the temperature of the secondary heat treatment is specifically 500°C, 600°C, 700°C, 800°C, 900°C, 1000°C, 1200°C, 1200°C, and the like, and other values within the ranges described above may also be used herein without limitation. The time of the secondary heat treatment is specifically 1 h, 2 h, 3 h, 4 h, 5 h, 6 h, 7 h, 8 h, 9 h, or 15 h, etc., and other values within the ranges described above may also be used herein without limitation.

In some embodiments, a temperature ramp rate at the secondary heat treatment is 1 to 30 °C/min. For example, it may be, preferably, a temperature ramp rate of 1 to 15°C/min during the secondary heat treatment. The temperature ramp rate at the secondary heat treatment is 1°C/min to 30°C/min, specifically 1°C/min, 5°C/min, 10°C/min, 15°C/min, 20°C/min, 25°C/min or 30°C/min, and so on, and other values within the ranges described above may also be used herein without limitation.

In one embodiment, the temperature ramp rate at primary heat treatment is 1°C/min to 15°C/min.

In some embodiments, the secondary heat treatment is conducted under a protective gas condition, the protective gas comprising at least one of nitrogen, helium, neon, argon, and krypton.

In the technical solution of the present disclosure, the coating carbon layer on the surface of the aggregate formed from the active material and the carbon material using the negative electrode material made by preparation method may inhibit expansion of the material during cycling. Its core structure aggregates have a higher compressive hardness, have strong rigidity, can be effective against certain volume expansion stresses, facilitate maintaining structural stability of the negative electrode material, thereby reducing expansion rates, improving the cycle performance of battery. The aggregate has a low porosity, high solidity, facilitates formation of a stable solid electrolyte membrane, reduces electrolyte contact with the active material, reduces material volume expansion, and improves cycle performance.

The present disclosure also provides a lithium ion battery including the negative electrode material described above.

### Example

The following are exemplary but non-limiting embodiments of the present disclosure:

### Example 1

The preparation method of negative electrode material of the present embodiment includes the following steps:
(1) Si powder has a median particle size of 100 nm, SiO particles have an aspect ratio of 22, lauric acid, and phenolic resin were added to 40% ethylene glycol solution in a mass ratio of 60: 4.5: 3.9: 22.9, followed by ultrasonic dispersion for 10 min to obtain a dispersion solution, then the dispersion solution was triturated in a ball mill for 4 hours to obtain a precursor solution, followed by a drying treatment, and the drying temperature is 190 °C for 3 h to obtain the precursor.
(2) The precursor was placed in a fusion machine, and the rotational speed of the fusion machine was 500 r/min; a blade gap for mechanical fusion is 0.05 cm; the mechanical fusion time is 0.5 h. The fused material was placed in the heat treatment furnace and then nitrogen was fed into the furnace for a primary heat treatment at 600 °C for 3h to obtain an aggregate.
(3) The aggregates were mixed with glucose in a mass ratio of 30: 45, followed by placement of the mixed material into a high temperature box furnace, and then nitrogen was fed into the furnace, after secondary heat treatment at 1000 ° C and heat preservation for 6h, screened through a 500 mesh screen to obtain negative electrode material.

The negative electrode material prepared in this example includes an aggregate and a carbon layer coated on the surface of the aggregate, the aggregate comprises Si powder, SiO particles and carbon material, and a mass ratio of silicon powder, SiO particles and carbon material is 55.9: 4.3: 39.8, a median particle size of negative electrode material is 16 µm, a specific surface area is 5.2 m²/g, the carbon layer has an average thickness of 166 nm. The aggregate particles were tested using a mercury intrusion method, the aggregate has a porosity of 5.5%; the aggregate particles were tested using a nanoindentation to obtain a compressive hardness of the aggregate of 330 MPa on average. A difference between a test density of the aggregate and a theoretical density of the silicon powder, the SiO particles, and the carbon material was 0.9%.

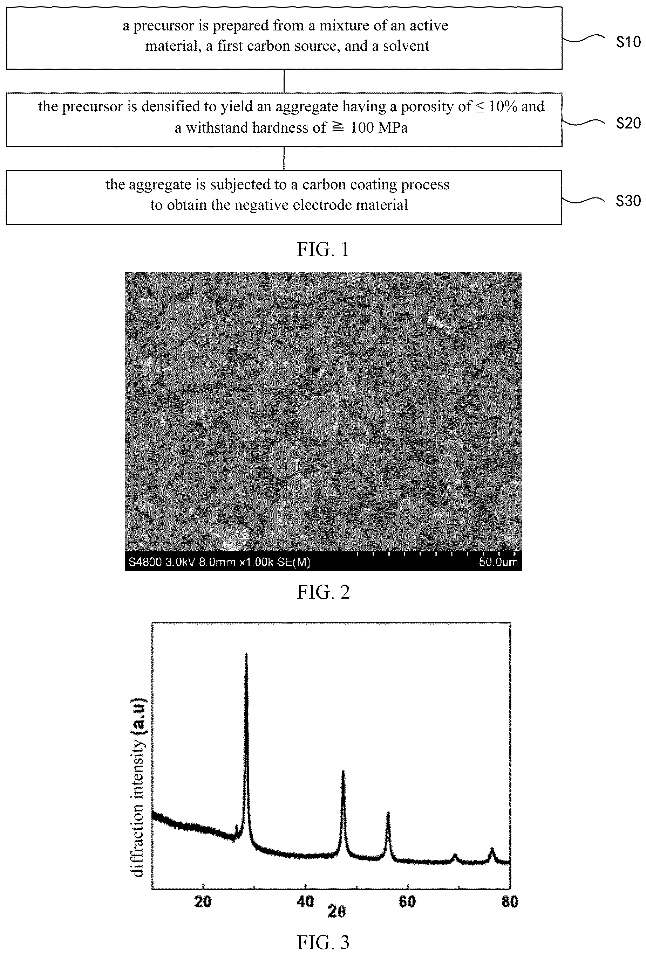

FIG. 2 is a scanning electron micrograph of the negative electrode material made in Example 1, there is a peak of silicon peak in the X-ray diffraction pattern of FIG. 3.

### Example 2

The preparation method of the negative electrode material of the present embodiment includes the following steps:
(1) Si powder having a median particle size of 80 nm, GeO₂ particles having an aspect ratio of 12, palmitic acid and polyvinylpyrrolidone were added to the propanol solution in a mass ratio of 40: 1.8: 8: 21.9, an ultrasonic dispersion was performed for 15 min to obtain a dispersion solution, then the dispersion solution was triturated in a ball mill for 3 hours to obtain a precursor solution which was dried at 190 °C for 3 h to obtain a precursor.
(2) The precursor was placed in a fusion machine, and a rotational speed of the fusion machine was 800 r/min; a blade gap is 0.15 cm; and a fusion time is 1.5 h. The fused material was placed in a heat treatment furnace and then and then nitrogen was fed into the furnace, and the furnace was heated to 900 °C for a primary heat treatment for 3h to obtain an aggregate.
(3) The aggregates were mixed with sucrose in a mass ratio of 20: 45, followed by placement of the mixed material into a high temperature box furnace, and then nitrogen was fed into the furnace, and the mixed material was subjected to a secondary heat treatment at 900 °C for 5h, crushed, screened through a 500 mesh screen to obtain the negative electrode material.

The negative electrode material prepared in this example includes an aggregate and a carbon layer coated on the surface of the aggregate, the aggregate comprises Si powder, GeO₂ particles, and carbon materials, a mass ratio of Si powder, GeO₂ particles to carbon material is 63.3: 2.9: 33.8. The negative electrode material has a median particle size of 12 µm, a specific surface area of 3.2m²/g, and an average thickness of 154 nm for the carbon layer. The aggregate particles were tested using a mercury intrusion method, the aggregate having a porosity of 4.9%; and the aggregate particles were tested using a nanoindentation to obtain a compressive hardness of 540 MPa on average. The theoretical density difference between the test density of the aggregate and the silica powder, SiO particles, and carbon material in the aggregate was 2.09%.

### Example 3

The preparation method of the negative electrode material of the present embodiment includes the following steps:
(1) The Si powder having a median particle size of 50 nm, SnO₂ particles having an aspect ratio of 6, linoleic acid, and polyethylene were added to 40% ethanol solution in a mass ratio of 20: 1: 5: 24.5, followed by an ultrasonic dispersion for 25 min to obtain a dispersion solution, then the dispersion solution was triturated in a ball mill for 8 hours to obtain a precursor solution, followed by a drying treatment at 200 °C for 3 h, then a precursor was obtained.
(2) The precursor was placed in a fusion machine, and a rotational speed of the fusion machine was 600 r/min; a blade gap was 0.3 cm; and the fusion time was 3 h. The fused material was placed in a heat treatment furnace and then nitrogen was fed into the furnace for primary heat treatment at 900 °C for 5 h to obtain an aggregate.
(3) The aggregate was mixed with the asphalt in a mass ratio of 30: 55, followed by placement of the mixed material into a high temperature box furnace, and then nitrogen was fed into the furnace, and the mixed material was subjected to a secondary heat treatment at 950 °C for 2h, then crushed, screened through a 500 mesh screen to obtain the negative electrode material.

The negative electrode material prepared in this example includes an aggregate and a carbon layer coated on the surface of the aggregate, the aggregate comprises Si powder, SnO₂ particles, and a carbon material; Si powder, SnO₂ particles, and carbon material have a mass ratio of 48.1: 2.3: 49.6; the negative electrode material has a median particle size of 8.4 µm, a specific surface area of 4.2 m²/g, and a carbon layer has an average thickness of 79 nm. The aggregate particles were tested using a mercury intrusion method, the aggregate has a porosity of 6.5%; the aggregate particles were tested using a nanoindentation, to obtain a compressive hardness of the 116 MPa on average. A difference between a test density of the aggregate and a theoretical density of Si powder, SnO₂ particles and carbon materials in the aggregate is 2.78%.

### Example 4

The preparation method of negative electrode material of the present embodiment includes the following steps:
(1) Si powder having a median particle size of 20 nm, ZnO particles having an aspect ratio of 18, oleic acid, and polyethylene glycol were added to the n-butanol solution in a mass ratio of 40: 10.5: 9: 29.5, followed by an ultrasonic dispersion for 45 min to obtain a dispersion solution, then the dispersion solution was triturated in a ball mill for 6 hours to obtain precursor solution, followed by drying treatment, drying temperature of 250 °C, a time of 2.5h, and a precursor was obtained.
(2) The precursor was placed in the fusion machine, and a rotational speed of the fusion machine was 900 r/min; a blade gap was 0.4 cm; and the mechanical fusion time was 3 h. The fused material was placed in a heat treatment furnace and then and then nitrogen was fed into the furnace for a primary heat treatment at 780 °C for 8 h to obtain an aggregate.
(3) The aggregate was mixed with asphalt in a mass ratio of 40: 45, followed by placement of the mixed material into a high temperature box furnace, and then nitrogen was fed into the furnace, the mixed material was subjected to a secondary heat treatment at 950 °C for 6 h, and then crushed, screened through a 500 mesh screen to obtain the negative electrode material.

The negative electrode material prepared in this example includes an aggregate and a carbon layer coated on the surface of the aggregate, the aggregate comprises Si powder, ZnO particles and carbon material, a mass ratio of Si powder, ZnO particles to carbon material is 51.3: 13.5: 35.2. The negative electrode material had a median particle size of 6.4 µm, a specific surface area of 3.2m²/g, and an average thickness of 155 nm of the carbon layer. The aggregate particles were tested using a mercury intrusion method, and the aggregate has a porosity of 8.5%; the aggregate particles were tested using a nanoindentation to have a compressive hardness of 555 MPa on average. A difference between a test density of the aggregate and a theoretical density of the Si powder, ZnO particles, and carbon material in the aggregate was 3.98%.

### Example 5

The preparation method of negative electrode material of the present embodiment includes the following steps:
(1) Si powder having a median particle size of 50 nm, TiO₂ particles having an aspect ratio of 18, decanoic acid and bitumen were added to the ethylene glycol solution in a mass ratio of 80: 9: 10: 9.5, followed by an ultrasonic dispersion for 45 min to obtain a dispersion solution, then the dispersion solution was triturated in a ball mill for 6 hours to obtain precursor solution, followed by a drying treatment at150 °C, a time of 5h, and a precursor was obtained.
(2) The precursor was placed in the fusion machine, and the rotational speed of the fusion machine was 650r/min; a blade gap of 0.35 cm; a fusion time of 2h, the fused material was placed in a heat treatment furnace, then the helium gas was passed to a heat treatment at 600 °C and holding for 6h, followed by crushing of the heat-treated material, placed in a vapor deposition furnace, the temperature of vapor deposition is 1000 °C, an access to methane deposition 1.5h to form a carbon material, and an aggregate obtained.
(3) The aggregate was mixed with the asphalt in a mass ratio of 50: 35, followed by placement of the mixed material into a high temperature box furnace, and then nitrogen was fed into the furnace, the mixed material was subjected to a secondary heat treatment at 920 °C for 5 h, then crushed, screened through a 500 mesh screen to obtain the negative electrode material.

The negative electrode material prepared in this example includes an aggregate and a carbon layer coated on the surface of the aggregate, the aggregate comprises Si powder, TiO₂ particles and carbon materials, the mass ratio of Si powder, TiO₂ particles to carbon material is 65.2: 7.3: 27.5. The negative electrode material had a median particle size of 6 µm, a specific surface area of 2.3m^{2/}g, and an average thickness of 418 nm of the carbon layer. The aggregate particles were tested using a mercury intrusion method, and the aggregate has a porosity of 3.5%; the aggregate particles were tested using a nanoindentation to obtain a compressive hardness of the aggregate of 756MPa on average. A difference between the test density of the aggregate and a theoretical density of the Si powder, TiO₂ particles, and carbon material in the aggregate was 4.38%.

### Example 6

The preparation method of negative electrode material of the present embodiment includes the following steps:
(1) Si powder having a median particle size of 50 nm, TiO₂ particles having an aspect ratio of 17, decanoic acid and pitch were added to the ethylene glycol solution in a mass ratio of 22: 8: 10: 16.5, followed by an ultrasonic dispersion for 45 min to obtain a dispersion solution, the dispersion solution is triturated in a ball mill for 4 hours to obtain a precursor solution, and a drying treatment is performed to obtain a precursor.
(2) The precursor was placed in a fusion machine, and a rotational speed of the fusion machine was 800 r/min; a blade gap was 0.2 cm; and a fusion time was 3 h. The fused material was placed in a heat treatment furnace and then helium was fed for a heat treatment at 770 °C for 5 h, followed by a crushing of the heat-treated material, then the material was placed in a vapor deposition furnace at 900 °C, acetylene gas was introduced for vapor deposition for 0.5 h to form a carbon material, and an aggregate obtained.
(3) The aggregate was mixed with asphalt in a mass ratio of 35: 50, followed by placement of the mixed material into a high temperature box furnace, and nitrogen was fed into the furnace, and then the mixed material is subjected to a secondary heat treatment at 920 °C and holding for 4h, then crushed, screened through a 500 mesh screen to obtain the negative electrode material.

The negative electrode material prepared in this example includes an aggregate and a carbon layer coated on the surface of the aggregate, the aggregate comprises Si powder, TiO₂ particles and a carbon material, a mass ratio of Si powder, TiO₂ particles to carbon material is 39.1: 14.5: 46.4, a negative electrode material has a median particle size of 5.2 µm, a specific surface area of 1.3m^{2/}g, and an average thickness of 511 nm of a carbon layer. The aggregate particles were tested using a mercury intrusion method, and the aggregate has a porosity of 1.5%; the aggregate particles were tested using a nanoindentation to obtain a compressive hardness of the aggregate of 35.6 MPa on average. A difference between a test density of the aggregate and a theoretical density of the Si powder, TiO₂ particles, and the carbon material was 1.58%.

### Example 7

The preparation method of negative electrode material of the present embodiment includes the following steps:
(1) Ge powder having a median particle size of 100 nm, ZnO particles having an aspect ratio of 8, oleic acid and fructose were added to the ethylene glycol solution in a mass ratio of 90: 11: 5.5: 18.9, followed by an ultrasonic dispersion for 45 min to obtain a dispersion solution, then the dispersion solution was triturated in a ball mill for 8 hours to obtain a precursor solution, followed by a drying treatment at 190 °C for 3h, and a precursor was obtained.
(2) The precursor was placed in the fusion machine, and a rotational speed of a fusion machine was 900r/min; a blade gap was 0.3 cm; and a fusion time was 3 h. The fused material was placed in a vapor deposition furnace and then an acetylene gas was fed into the vapor deposition furnace at 1050 °C for deposition for 1 h to form a carbon material, and then an aggregate was obtained.
(3) The aggregate was mixed with the asphalt in a mass ratio of 45: 40, followed by placement of the mixed material into a high temperature box furnace, and then nitrogen was fed into the furnace, the mixed material is subjected to a secondary heat treatment at 1020 °C for 2 h, and then crushed, screened through a 500 mesh screen to obtain the negative electrode material.

The negative electrode material prepared in this example includes an aggregate and a carbon layer coated on the surface of the aggregate, the aggregate comprises Ge powder, ZnO particles and a carbon material; a mass ratio of Ge powder, ZnO particles, and carbon material is 65.3: 8: 26.7. The negative electrode material has a median particle size of 11.2 µm, a specific surface area of 3.3m^{2/}g, and an average thickness of 310 nm of the carbon layer. The aggregate particles were tested using a mercury intrusion method, and the aggregate has a porosity of 3.2%; the aggregate particles were tested using a nanoindentation to obtain a compressive hardness of 446 MPa on average. A difference between the test density of the aggregate and a theoretical density of the Ge powder, ZnO particles, and carbon material in the aggregate was 5.11%.

### Example 8

The preparation method of negative electrode material of the present embodiment includes the following steps:
(1) The Al powder having a median particle size of 120 nm, the Fe₃O₄ particles having an aspect ratio of 18, lauric acid and the bitumen were added to the ethanol solution in a mass ratio of 20: 2: 6.9: 10 to 40%, followed by an ultrasonic dispersion for 45 min to obtain a dispersion solution, then the dispersion solution was triturated in a ball mill for 4 h to obtain a precursor solution, followed by a drying treatment at 200 °C for 3 h, and a precursor was obtained.
(2) The precursor was placed in the fusion machine, and a rotational speed of the fusion machine was 650 r/min; a blade gap was 0.5 cm; and a fusion time was 3 h. The fused material was placed in a heat treatment furnace and then subjected to a primary heat treatment at 790 °C for 4h to obtain an aggregate.
(3) The aggregate was mixed with the asphalt in a mass ratio of 100: 45, followed by placement of the mixed material into a high temperature box furnace, and then nitrogen was fed into the furnace, the mixed material is subjected to a the mixed material is subjected to a secondary heat treatment at 820°C. and holding for 4h, crushed, screened through a 500 mesh screen to obtain the negative electrode material.

The negative electrode material prepared in this example includes an aggregate and a carbon layer coated on the surface of the aggregate, the aggregate comprises Al powder, Fe₃O₄ particles and carbon materials, a mass ratio of Al powder, Fe₃O₄ particles and carbon material is 59.6: 5.96: 34.44. The negative electrode material has a median particle size of 16.2 µm, a specific surface area of 4.3m^{2/}g, and an average thickness of the carbon layer of 351 nm. The aggregate particles were tested using a mercury intrusion method and the aggregate has a porosity of 4.0%; the aggregate particles were tested using a nanoindentation to obtain a compressive hardness of the aggregate of 292MPa on average. A difference between the test density of the aggregate and the Al powder, Fe₃O₄ particles, and a theoretical density of the carbon material in the aggregate was 4.78%.

### Example 9

This example differs from Example 1 in that a mass ratio of Si powder having a median particle size of 100 nm, SiO particles having an aspect ratio of 22, lauric acid and phenolic resin in step 1) is 15: 2: 1.5: 12.5; and the temperature of primary heat treatment in step 2) is 1200 °C

The negative electrode material prepared in this example includes an aggregate and a carbon layer coated on the surface of the aggregate, the aggregate comprises silicon powder, SiO particles and carbon material, a mass ratio of Si powder, SiO particles and carbon material is 51.3: 6.8: 41.9, a median particle size of negative electrode material is 14.7 µm, a specific surface area is 3.2m^{2/}g, the carbon layer has an average thickness of 378 nm. The aggregate particles were tested using a mercury intrusion method and the aggregate has a porosity of 3.5%; the aggregate particles were tested using a nanoindentation, to obtain a compressive hardness of the aggregate of 380 MPa on average. A difference between the test density of the aggregate and a theoretical density of Si powder, SiO particles, carbon material in the aggregate was 0.99%.

### Example 10

This example differs from Example 1 in that the mass ratio of Si powder having a median particle size of 100 nm, SiO particles having an aspect ratio of 22, lauric acid, and phenolic resin in step 1) is 120:15.5:5.9:45.9; and the temperature of secondary heat treatment in step 3) is 600 °C

The negative electrode material prepared in this example includes an aggregate and a carbon layer coated on the surface of the aggregate, the aggregate comprises silicon powder, SiO particles and carbon material, a mass ratio of Si powder, SiO particles and carbon material is 60.7:7.8:31.5, a median particle size of negative electrode material is 17.7 µm, a specific surface area is 6.1 m^{2/}g, a carbon layer has an average thickness of 240 nm. The aggregate particles were tested using a mercury intrusion method and the aggregate has a porosity of 4.8%; the aggregate particles were tested using a nanoindentation to obtain a compressive hardness of the aggregate of 160 MPa on average. A difference between the test density of the aggregate and a theoretical density of Si powder, SiO particles, and carbon material in the aggregate was 8.18%.

### Example 11

This example differs from Example 1 in that the mass ratio of Si powder having a median particle size of 100 nm, SiO particles having an aspect ratio of 22, CNT having a diameter of 20nm, lauric acid, and phenolic resin in step 1) is 60:4.5:0.9:3.9:22.9; The rest of the parameters remain the same.

The negative electrode material prepared in this example includes an aggregate and a carbon layer coated on the surface of the aggregate, the aggregate comprises silicon powder, SiO particles and carbon material, a mass ratio of Si powder, SiO particles, CNT and carbon material is 60.7:5.8:1.9:31.6, a median particle size of negative electrode material is 13.7 µm, a specific surface area is 5.1m^{2/}g, the carbon layer has an average thickness of 221 nm. The aggregate particles were tested using a mercury intrusion method and the aggregate has a porosity of 7.8%; the aggregate particles were tested using a nanoindentation to obtain a compressive hardness of the aggregate of 375 MPa on average. A difference between the test density of the aggregate and a theoretical density of Si powder, SiO particles, and carbon material in the aggregate was 9.4%.

### Example 12

This example differs from Example 1 in that the carbon coating treatment step in step 3) is not carried out.

The negative electrode material prepared in this example includes an aggregate and the aggregate comprises silicon powder, SiO particles and carbon material, a mass ratio of Si powder, SiO particles, and carbon material is 55.9:4.3:39.8, a median particle size of negative electrode material is 14.9 µm, a specific surface area is 3.8m^{2/}g. The aggregate particles were tested using a mercury intrusion method and the aggregate has a porosity of 6.7%; the aggregate particles were tested using a nanoindentation to obtain a compressive hardness of the aggregate of 240 MPa on average. A difference between the test density of the aggregate and a theoretical density of Si powder, SiO particles, and carbon material in the aggregate was 0.9%.

### Example 13

The preparation method of negative electrode material of the present embodiment includes the following steps:
(1) Si powder with a median particle size of 100 nm, lauric acid and phenolic resin were added to 40% ethylene glycol solution in a mass ratio of 60: 3.9: 22.9, followed by an ultrasonic dispersion for 10 min to obtain a dispersion solution, the dispersion solution was triturated in a ball mill for 4 hours to obtain a precursor solution, then a drying treatment was performed at 190 °C for 3 h, and a precursor was obtained.
(2) The precursor was placed in a fusion machine at a rotational speed of 500r/min; a fuser blade gap width for a mechanical fusion was 0.05 cm; a mechanical fusion time was 0.5 h, the fused material was placed in a heat treatment furnace, and then nitrogen was fed into the furnace for primary heat treatment at 600 °C for 3 h to obtain the negative electrode material.

The negative electrode material prepared in this example includes an aggregate and the aggregate comprises Si powder and a carbon material, a mass ratio of silicon powder to carbon material is 55.1: 44.9, the negative electrode material has a median particle size of 14.6 µm, a specific surface area of 4.7m^{2/}g; the aggregate particles were tested using a mercury intrusion method and the aggregate has a porosity of 5.8%; and the aggregate particles were tested using a nanoindentation to obtain a compressive hardness of the aggregate of 195 MPa on average. A difference between the test density of the aggregate and a theoretical density of silicon powder, carbon material was 1.1%.

### Example 14

This example differs from Example 1 in step 1), in step 1) , the Si powder with a median particle size of 100 nm, lauric acid and phenolic resin were added to 40% ethylene glycol solution in a mass ratio of 60: 5.9: 45, followed by an ultrasonic dispersion for 10 min to obtain a dispersion solution, then the dispersion solution was triturated in a ball mill for 4 h to obtain a precursor solution, followed by a drying treatment at 190 °C for 3 h to obtain a precursor.

The negative electrode material prepared in this example includes an aggregate and a carbon layer coated on the surface of the aggregate, the aggregate comprises Si powder and a carbon material, a mass ratio of silicon powder to carbon material is45.9: 54.1, the negative electrode material has a median particle size of 12.5 µm, a specific surface area of 3.1m²/g, an average thickness of 425 nm of a carbon layer. The aggregate particles were tested using a mercury intrusion method and the aggregate has a porosity of 4.9%; the aggregate particles were tested using a nanoindentation to obtain a compressive hardness of the aggregate of 208 MPa on average. A difference between the test density of the aggregate and a theoretical density of silicon powder and carbon material was 0.6%.

### Example 15

This example differs from Example 1 in step 1), in step 1) , the Si powder with a median particle size of 100 nm, FeSi₂, lauric acid, and phenolic resin were added to 40% ethylene glycol solution in a mass ratio of 60: 4.5: 3.9: 22.9 to 40% ethylene glycol solution, followed by an ultrasonic dispersion for 10 min to obtain a dispersion solution, then the dispersion solution was triturated in a ball mill for 4 h to obtain precursor solution, followed by a drying treatment at 190 °C for 3h to obtain a precursor.

The negative electrode material prepared in this example includes an aggregate and a carbon layer coated on the surface of the aggregate, the aggregate comprises Si powder and carbon materials; silicon powder, FeSi₂ and carbon material in a mass ratio of 55.3: 4.2: 40.5, the negative electrode material has a median particle size of 14.9 µm, a specific surface area of 4.9m^{2/}g, and the carbon layer has an average thickness of 176 nm; the aggregate particles were tested using a mercury intrusion method and the aggregate has a porosity of 5.3%; the aggregate particles were tested using a nanoindentation to obtain a compressive hardness of the aggregate of 319 MPa on average. A difference between the test density of the aggregate and a theoretical density of silicon powder and carbon material was 0.8%.

### Example 16

The negative electrode material was prepared in substantially the same manner as in Example 1 except lauric acid was not added.

The negative electrode material made in this example includes an aggregate and a carbon layer coated on the surface of the aggregate, the aggregate comprises silicon powder, SiO particles and carbon material, a mass ratio of silicon powder, SiO particles to carbon material is 55.9: 4.2: 39.4, the negative electrode material has a median particle size of 15.8 µm, a specific surface area of 5.0m^{2/}g, and the carbon layer has an average thickness of 159 nm. The aggregate particles were tested using a mercury intrusion method, the aggregate has a porosity of 6.2%; the aggregate particles were tested using a nanoindentation, to obtain a compressive hardness of the aggregate of 278 MPa on average. A difference between the test density of the aggregate and a theoretical density of silicon powder, SiO particles, and carbon material in the aggregate was 4.8%.

### Example 17

Negative electrode material was prepared in substantially the same manner as in Example 1, except that the SiO aspect ratio was 2.1.

The negative electrode material made in this example includes an aggregate and a carbon layer coated on the surface of the aggregate, the aggregate comprises silicon powder, SiO particles, and carbon material, the mass ratio of silicon powder, SiO particles to carbon material is55.4: 4.3: 39.9, the median particle size of negative electrode material is17.8 µm, the specific surface area is5.4m^{2/}g, the carbon layer has an average thickness of 169 nm. The aggregate particles were tested using a mercury intrusion method, the aggregate has a porosity of 6.0%; the aggregate particles were tested using a nanoindentation to obtain a compressive hardness of the aggregate of 244 MPa on average. A difference between the test density of the aggregate and a theoretical density of silicon powder, SiO particles, and carbon material in the aggregate was 8.9%.

### Comparative Example 1

The negative electrode material was prepared in substantially the same manner as in Example 1, except that no fusion treatment was performed.

A porosity of the aggregate in the present comparative example was 22.4%, a compressive hardness of the aggregate on average was 50.3 MPa, A difference between the test density of the aggregate and the theoretical density of silica powder, SiO particles and carbon materials in the aggregate is 10.1%.

### Test Methods

### (1) Button battery testing

Electrochemical cycle performance was tested using the following method: the resulting silicon carbon composite negative electrode material, conductive agent, and binder were dissolved in a solvent to obtain a mixture according to the mass percentage of 94: 1: 5, a solids content is controlled to 50%, the mixture was coated on a copper foil current collector, vacuum baked to obtain an anode electrode; then a ternary positive electrode prepared using a conventional mature process, 1 mol/L of LiPF6/vinyl carbonate, dimethyl carbonate carbonate, methyl ethyl carbonate (v/v = 1: 1: 1) electrolyte, a Celgard 2400 separator, and a housing were assembled using a conventional production process to obtain a lithium ion button battery. An initial thickness of the electrode of the lithium ion battery was measured using a micrometer to be H0, the charging and discharging experiments of the lithium ion battery is carried out on the LAND battery experiment system of Wuhan Jinnuo Electronics Co., LTD., in normal temperature conditions, with 0.2C constant current charging and discharging, and the charging and discharging voltages were limited to 2.75-4.2V , in these conditions, a first reversible capacity, a primary charge capacity, and a primary discharge capacity were obtained. An initial coulombic efficiency = primary discharge capacity/primary charge capacity.

The cycling was repeated for 50 rounds, a thickness of the electrode of the lithium ion battery was measured using a micrometer to be H1, an expansion ratio after 50 repeated cycles = (H1-H0)/H0 × 100%.

Repeat the cycle for 100 rounds, the discharge capacity was recorded as the rest capacity of the lithium ion battery; the capacity retention ratio = the rest capacity/the initial capacity × 100%.

### (2) Porosity of aggregates testing

Porosity was determined by a mercury intrusion method using a mercury gauge. Porosity was determined for at least three times, using an arithmetic average value of the at least three times determination as a determination result.
(3) Compressive hardness of aggregates test:
   A compressive hardness was tested by a nanoindentation test using a load of 0.6 N, an indentation depth of 0.5 µm for the compressive hardness test.
(4) Test method of specific surface area: The specific surface area of negative electrode material was measured using a Mcgrams specific surface area analyzer.
(5) Test method of conductivity: The conductivity of the negative electrode material was measured using powder resistivity tester.

Results of the performance described above are tested as follows:

**TABLE 1 Performance comparison result table**

| Sample | Porosity (%) | Pressure resistant Hardness mean (MPa) | First Reversible Capacity (mAh/g) | Initial coulombic efficiency (% ) | 100 week cycle capacity retention (%) | 50 peripheral electrode expansion (%) |
|---|---|---|---|---|---|---|
| Example 1 | 5.5 | 330 | 1544 | 88.1 | 92.1 | 35.3 |
| Example 2 | 4.9 | 540 | 1767 | 89.1 | 92.3 | 39.6 |
| Example 3 | 6.5 | 116 | 1380 | 88.9 | 94.2 | 33.7 |
| Example 4 | 8.5 | 556 | 1491 | 88.7 | 92.9 | 36.1 |
| Example 5 | 3.5 | 756 | 1693 | 88.6 | 91.7 | 39.8 |
| Example 6 | 1.5 | 356 | 788 | 88.1 | 90.5 | 33.1 |
| Example 7 | 3.2 | 846 | 833 | 89.3 | 95.4 | 34.1 |
| Example 8 | 4.0 | 292 | 984.5 | 85.3 | 88.9 | 36.2 |
| Example 9 | 3.5 | 380 | 1378 | 86.1 | 91.9 | 34.9 |
| Example 13 | 4.8 | 160 | 1779 | 88.9 | 92.2 | 39.9 |
| Example 14 | 5.0 | 375 | 1540 | 87.9 | 94.2 | 34.6 |
| Example 15 | 6.7 | 240 | 1594 | 86.9 | 91.1 | 36.9 |
| Comparative Example 1 | 5.8 | 195 | 1504 | 87.5 | 91.4 | 36.9 |
| Example 14 | 4.9 | 208 | 1339 | 88.3 | 91.9 | 36.1 |
| Example 15 | 5.3 | 319 | 1522 | 88.5 | 92.6 | 35.4 |
| Example 16 | 9.4 | 102 | 1489 | 86.8 | 88.1 | 41.2 |
| Example 20 | 6.0 | 244 | 1533 | 87.9 | 85.9 | 38.2 |
| Comparative Example 1 | 22.4 | 50.3 | 1546 | 86.9 | 80.1 | 49.2 |

As shown in Table 1, in the negative electrode material prepared in Example 1 to Example 17, wherein a porosity of the aggregate is ≤ 10%, and the compressive hardness is ≧ 100 MPa, the expansion rate, the cycle life, and the first efficiency of the anode electrode of the negative electrode material are improved. This is due to the aggregate has high compressive hardness in the negative electrode material, which enhances the stability of the structure, keeps structural stability in the expansion-shrinkage process as much as possible, reduces the probability that the carbon layer is destroyed; while the aggregate has a low porosity characteristic, even if the carbon layer of the surface is destroyed, the electrolyte is still difficult to penetrate due to surface tension in the aggregate, thereby improving electrochemical performance.

In a preparation process of the negative electrode material of Example 16, compared with Example 1, the connection between the active particles and the carbon matrix and metal oxides is less tight without adding additives, such that a compressive hardness of the aggregate is lower, and the swelling buffer inhibition effect is weakened.

The negative electrode material of Example 16 had less intimate contact between the active particle and the carbon matrix, the metal oxide relative to Example 1 in the preparation process, thus obtaining a lower compressive hardness of the aggregate, which decreases the expansion buffer inhibition effect.

The negative electrode material in the Comparative Example 1 was not subjected to a fusion treatment during a preparation process, making it difficult for the precursor to form an aggregate with a high compressive hardness, therefore the porosity thereof is too high. During a long cycle, as the volume expansion is easy to destroy the carbon layer structure on the surface, thereby breaking the core structure, the electrolyte easily penetrates into an inner side of the particle to form a thick SEI film, and consumes a large amount of active lithium ion, therefore, its cycle capacity retention rate is only 80.1%, which is significantly reduced compared to the cycle capacity retention ratio 94.1% in Example 1, and the electrode expansion ratio thereof is 49.2%, which is also significantly increased compared to the electrode expansion ratio of 35.3% in the Examples in the present disclosure. As can be seen, by the fusion process, the compressive hardness of the aggregates can be improved, the battery cycle performance can be effectively improved, and the expansion will be inhibited.

### Industrial applicability

In summary, the present disclosure provides a negative electrode material, a preparation method of the negative electrode material, and a lithium ion battery. The negative electrode material has excellent structural stability, can be effective to suppress volume expansion of negative electrode material, and improves battery cycle performance, which reduce production costs.

## Claims

1. A negative electrode material for lithium ion battery, comprising an aggregate, the aggregate comprising an active material and a carbon material, wherein the aggregate has a porosity of ≤ 10% and a compressive hardness of ≥ 100 Mpa, wherein Porosity is determined by a mercury intrusion method using a mercury gauge and compressive hardness is tested by a nanoindentation test, as specified in the description;
wherein the active material comprises at least one of an oxide of silicon, a non-metal element, an elemental metal, and an alloy of the elemental metal with silicon;
the aggregate further comprises an electrical conductivity enhancer comprising at least one of an alloy material and a conductive carbon, wherein the conductive carbon comprises one of graphite fibers, carbon nanotubes, graphite sheets, conductive carbon fibers, and graphene;
the electrical conductivity enhancer has a conductivity of 10⁰ S/m to 10⁸ S/m; and is in a form of a sheet and/or a long strip; and
the electrical conductivity enhancer has an aspect ratio of 2:1 to 5000:1.

2. The negative electrode material for lithium ion battery according to claim 1,
wherein the elemental metal comprises at least one of Li, Na, K, Sn, Ge, Fe, Mg, Ti, Zn, Al, and Cu.

3. The negative electrode material for lithium ion battery according to claim 1,
wherein the non-metal element comprises at least one of Si and P.

4. The negative electrode material for lithium ion battery according to claim 1,
wherein the oxide of silicon comprising SiOx, wherein 0 < x ≤ 2.

5. The negative electrode material for lithium ion battery according to claim 1,
wherein the alloy of the elemental metal with silicon comprises at least one of a silicon lithium alloy, a silicon sodium alloy, a silicon potassium alloy, a silicon tin alloy, a silicon germanium alloy, a silicon iron alloy, a silicon magnesium alloy, a silicon titanium alloy, a silicon-zinc alloy, a silicon aluminum alloy, and a silicon copper alloy.

6. The negative electrode material for lithium ion battery according to claim 1,
wherein the active material has a median particle size ranging from 1 nm to 500 nm, wherein the median particle size is measured according to the method of the description; and a mass ratio of the active material to the carbon material is (30-70): (10-70).

7. The negative electrode material for lithium ion battery according to claim 1,
wherein the carbon material comprises at least one of amorphous carbon, crystalline carbon, and mesocarbon microbeads, wherein the amorphous carbon comprises at least one of hard carbon and soft carbon.

8. The negative electrode material for lithium ion battery according to claim 1,
wherein a density of the aggregate satisfies the following relationship: (ρ2-ρ1) ρ2 ≤ 5%, wherein, ρ1 is a test density of the aggregate, ρ2 is a theoretical density of the aggregate, and ρ2 is a sum of a mass percent of each component in the aggregate * a value of a theoretical density of each component in the aggregate.

9. The negative electrode material for lithium ion battery according to claim 2,
wherein the aggregate further comprises a metal oxide, pores are provided between the active material and the metal oxide, and the pores are filled with the carbon material.

10. The negative electrode material for lithium ion battery according to claim 9,
wherein the metal oxide has a chemical formula of MₓO_{y} , where 0.2 ≤ y/x ≤ 3, and M comprises at least one of Sn, Ge, Fe, Cu, Ti, Na, Mg, Al, Ca, and Zn.

11. The negative electrode material for lithium ion battery according to claim 9,
wherein the active material and the metal oxide have a mass ratio of (30-70): (1-20).

12. The negative electrode material for lithium ion battery according claim 1, wherein the alloy material comprises at least one of a zinc alloy, an aluminum alloy, a copper alloy, a silicon alloy, a nickel alloy, and a titanium alloy; and
the conductive enhancer and the active material have a mass ratio of (0.1-10): 100.

13. The negative electrode material for lithium ion battery according claim 1, wherein:
the negative electrode material further comprises a carbon layer coated on at least at least part of a surface of the aggregate, and the carbon layer of the surface has a coating rate of 1%-100%; the carbon layer comprises amorphous carbon; and
the carbon layer has a thickness of 10 nm to 1500 nm.

14. The negative electrode material for lithium ion battery according claim 1, wherein the negative electrode material has a specific surface area of ≤10m ^{2/}g, and specific surface area of negative electrode material is measured using a Mcgrams specific surface area analyzer.

15. A lithium ion battery, comprising the negative electrode material according to any one of claims 1 to 14.

## Patentansprüche

1. Negativelektrodenmaterial für eine Lithium-Ionen-Batterie, umfassend ein Aggregat, wobei das Aggregat ein aktives Material und ein Kohlenstoffmaterial umfasst, wobei das Aggregat eine Porosität von ≤ 10 % und eine Druckhärte von ≥ 100 MPa aufweist, wobei die Porosität mittels eines Quecksilber-Intrusionsverfahrens unter Verwendung eines Quecksilbermessgeräts bestimmt wird und die Druckhärte durch einen Nanoindentierungstest geprüft wird, wie in der Beschreibung angegeben;
wobei das aktive Material mindestens eines der folgenden umfasst: ein Siliziumoxid, ein nichtmetallisches Element, ein elementares Metall und eine Legierung des elementaren Metalls mit Silizium;
wobei das Aggregat ferner einen elektrischen Leitfähigkeitsverstärker umfasst, der mindestens eines der folgenden umfasst: ein Legierungsmaterial und einen leitfähigen Kohlenstoff, wobei der leitfähige Kohlenstoff eines der folgenden umfasst: Graphitfasern, Kohlenstoffnanoröhren, Graphitplatten, leitfähige Kohlenstofffasern und Graphen;
wobei der elektrische Leitfähigkeitsverstärker eine Leitfähigkeit von 10⁰ S/m bis 10⁸ S/m aufweist; und in Form einer Folie und/oder eines langen Streifens vorliegt; und
wobei der elektrischen Leitfähigkeitsverstärker ein Seitenverhältnis von 2:1 bis 5000:1 aufweist.

2. Negativelektrodenmaterial für eine Lithium-Ionen-Batterie gemäß Anspruch 1, wobei das elementare Metall mindestens eines von Li, Na, K, Sn, Ge, Fe, Mg, Ti, Zn, Al und Cu umfasst.

3. Negativelektrodenmaterial für eine Lithium-Ionen-Batterie gemäß Anspruch 1, wobei das nichtmetallische Element mindestens eines von Si und P umfasst.

4. Negativelektrodenmaterial für eine Lithium-Ionen-Batterie gemäß Anspruch 1, wobei das Siliziumoxid SiOx umfasst, wobei 0 < x ≤ 2.

5. Negativelektrodenmaterial für eine Lithium-Ionen-Batterie gemäß Anspruch 1, wobei die Legierung des elementaren Metalls mit Silizium mindestens eine der folgenden umfasst: eine Silizium-Lithium-Legierung, eine Silizium-Natrium-Legierung, eine Silizium-Kalium-Legierung, eine Silizium-Zinn-Legierung, eine Silizium-Germanium-Legierung, eine Silizium-Eisen-Legierung, eine Silizium-Magnesium-Legierung, eine Silizium-Titan-Legierung, eine Silizium-Zink-Legierung, eine Silizium-Aluminium-Legierung und eine Silizium-Kupfer-Legierung.

6. Negativelektrodenmaterial für eine Lithium-Ionen-Batterie gemäß Anspruch 1, wobei das aktive Material eine Median-Partikelgröße im Bereich von 1 nm bis 500 nm aufweist, wobei die Median-Partikelgröße gemäß dem Verfahren in der Beschreibung gemessen wird; und ein Massenverhältnis des aktiven Materials zu dem Kohlenstoffmaterial (30-70):(10-70) ist.

7. Negativelektrodenmaterial für eine Lithium-Ionen-Batterie gemäß Anspruch 1, wobei das Kohlenstoffmaterial mindestens eines von amorphem Kohlenstoff, kristallinem Kohlenstoff und Mesokohlenstoff-Mikrokügelchen umfasst, wobei der amorphe Kohlenstoff mindestens eines von Hartkohlenstoff und Weichkohlenstoff umfasst.

8. Negativelektrodenmaterial für eine Lithium-Ionen-Batterie gemäß Anspruch 1, wobei eine Dichte des Aggregats die folgende Beziehung erfüllt: (ρ₂ - ρ₁) ρ₂ ≤ 5 %, wobei ρ₁ eine Testdichte des Aggregats ist, ρ₂ eine theoretische Dichte des Aggregats ist und ρ₂ eine Summe aus einem Massenanteil jeder Komponente in dem Aggregat * einem Wert der theoretischen Dichte jeder Komponente in dem Aggregat ist.

9. Negativelektrodenmaterial für eine Lithium-Ionen-Batterie gemäß Anspruch 2, wobei das Aggregat ferner ein Metalloxid umfasst, Poren zwischen dem aktiven Material und dem Metalloxid vorgesehen sind und die Poren mit dem Kohlenstoffmaterial gefüllt sind.

10. Negativelektrodenmaterial für eine Lithium-Ionen-Batterie gemäß Anspruch 9, wobei das Metalloxid eine chemische Formel MₓO_{y} aufweist, wobei 0,2 ≤ y/x ≤ 3 gilt und M mindestens eines von Sn, Ge, Fe, Cu, Ti, Na, Mg, Al, Ca und Zn umfasst.

11. Negativelektrodenmaterial für eine Lithium-Ionen-Batterie gemäß Anspruch 9, wobei das aktive Material und das Metalloxid ein Massenverhältnis von (30-70):(1-20) aufweisen.

12. Negativelektrodenmaterial für eine Lithium-Ionen-Batterie gemäß Anspruch 1, wobei das Legierungsmaterial mindestens eine der folgenden umfasst:
eine Zinklegierung, eine Aluminiumlegierung, eine Kupferlegierung, eine Siliziumlegierung, eine Nickellegierung und eine Titanlegierung; und
wobei der Leitfähigkeitsverstärker und das aktive Material ein Massenverhältnis von (0,1-10):100 aufweisen.

13. Negativelektrodenmaterial für eine Lithium-Ionen-Batterie gemäß Anspruch 1, wobei:
das Anodenmaterial ferner eine Kohlenstoffschicht umfasst, die auf mindestens einen Teil einer Oberfläche des Aggregats aufgebracht ist, und die Kohlenstoffschicht der Oberfläche einen Bedeckungsgrad von 1 % bis 100 % aufweist; die Kohlenstoffschicht amorphen Kohlenstoff umfasst; und
die Kohlenstoffschicht eine Dicke von 10 nm bis 1500 nm aufweist.

14. Negativelektrodenmaterial für eine Lithium-Ionen-Batterie gemäß Anspruch 1, wobei das Negativelektrodenmaterial eine spezifische Oberfläche von ≤ 10 m²/g aufweist und die spezifische Oberfläche des Negativelektrodenmaterials unter Verwendung eines Mcgrams-Analysators für die spezifische Oberfläche gemessen wird.

15. Lithium-Ionen-Batterie, umfassend das Negativelektrodenmaterial gemäß einem der Ansprüche 1 bis 14.

## Revendications

1. Matériau d'électrode négative pour une batterie lithium ion, comprenant un agrégat, l'agrégat comprenant un matériau actif et un matériau carboné, dans lequel l'agrégat a une porosité de ≤ 10 % et une dureté en compression de
≥ 100 Mpa, dans lequel la porosité est déterminée par une méthode d'intrusion de mercure à l'aide d'une jauge de mercure et une dureté en compression est testée par un essai de nanoindentation, comme spécifié dans la description ; dans lequel le matériau actif comprend l'un au moins d'un oxyde de silicium, d'un élément non métallique, d'un métal élémentaire, et d'un alliage du métal élémentaire avec du silicium ;
l'agrégat comprenant en outre un agent améliorant la conductivité électrique comprenant l'un au moins d'un matériau d'alliage et d'un carbone conducteur, dans lequel le carbone conducteur comprend un élément parmi des fibres de graphite, des nanotubes de carbone, des feuilles de graphite, des fibres de carbone conducteur, et du graphène ;
l'agent améliorant la conductivité électrique a une conductivité de 10⁰ S/m à 10⁸ S/m ; et est sous forme de feuille et/ou de ruban long ; et
l'agent améliorant la conductivité électrique a un rapport d'aspect de 2:1 à 5 000:1.

2. Matériau d'électrode négative pour une batterie lithium ion selon la revendication 1, dans lequel le métal élémentaire comprend au moins un élément parmi Li, Na, K, Sn, Ge, Fe, Mg, Ti, Zn, Al, et Cu.

3. Matériau d'électrode négative pour une batterie lithium ion selon la revendication 1, dans lequel l'élément non métallique comprend au moins un élément parmi Si et P.

4. Matériau d'électrode négative pour une batterie lithium ion selon la revendication 1, dans lequel l'oxyde de silicium comprend SᵢOₓ, où 0 < x ≤ 2.

5. Matériau d'électrode négative pour une batterie lithium ion selon la revendication 1, dans lequel l'alliage du métal élémentaire avec du silicium comprend l'un au moins d'un alliage silicium lithium, d'un alliage silicium sodium, d'un alliage silicium potassium, d'un alliage silicium étain, d'un alliage silicium germanium, d'un alliage silicium fer, d'un alliage silicium magnésium, d'un alliage silicium titane, d'un alliage silicium zinc, d'un alliage silicium aluminium, et d'un alliage silicium cuivre.

6. Matériau d'électrode négative pour une batterie lithium ion selon la revendication 1, dans lequel le matériau actif a une taille particulaire médiane allant de 1 nm à 500 nm, la taille particulaire médiane étant mesurée selon la méthode de la description ; et
un rapport massique du matériau actif sur le matériau carboné est de (30-70):(10-70).

7. Matériau d'électrode négative pour une batterie lithium ion selon la revendication 1, dans lequel le matériau carboné comprend l'un au moins d'un carbone amorphe, d'un carbone cristallin, et de microperles de mésocarbone, dans lequel le carbone amorphe comprend au moins un carbone dur et un carbone tendre.

8. Matériau d'électrode négative pour une batterie lithium ion selon la revendication 1, dans lequel une densité de l'agrégat satisfait à la relation suivante : (ρ2-ρ1) p2 ≤ 5 %, où ρ1 est une densité d'essai de l'agrégat, ρ2 est une densité théorique de l'agrégat, et ρ2 est une somme d'un pourcentage massique de chaque composant dans l'agrégat * une valeur d'une densité théorique de chaque composant dans l'agrégat.

9. Matériau d'électrode négative pour une batterie lithium ion selon la revendication 2, dans lequel l'agrégat comprend en outre un oxyde métallique, des pores sont prévus entre le matériau actif et l'oxyde métallique, et les pores sont remplis avec le matériau carboné.

10. Matériau d'électrode négative pour une batterie lithium ion selon la revendication 9, dans lequel l'oxyde métallique présente une formule chimique MₓO_{y}, où 0,2 ≤ y/x ≤ 3, et
M comprend l'un au moins de Sn, Ge, Fe, Cu, Ti, Na, Mg, Al, Ca et Zn.

11. Matériau d'électrode négative pour une batterie lithium ion selon la revendication 9, dans lequel le matériau actif et l'oxyde métallique ont un rapport massique de (30-70):(1-20).

12. Matériau d'électrode négative pour une batterie lithium ion selon la revendication 1, dans lequel le matériau d'alliage comprend l'un au moins d'un alliage de zinc, d'un alliage d'aluminium, d'un alliage de cuivre, d'un alliage de silicium, d'un alliage de nickel, et d'un alliage de titane ; et
l'agent améliorant la conductivité et le matériau actif ont un rapport massique de (0,1-10):(100).

13. Matériau d'électrode négative pour une batterie lithium ion selon la revendication 1, dans lequel :
le matériau d'électrode négative comprend en outre une couche de carbone revêtant au moins une partie d'une surface de l'agrégat, et la couche de carbone de la surface a un taux de revêtement de 1 % à 100 % ; la couche de carbone comprend un carbone amorphe ; et la couche de carbone a une épaisseur de 10 nm à 1 500 nm.

14. Matériau d'électrode négative pour une batterie lithium ion selon la revendication 1, dans lequel le matériau d'électrode négative a une surface spécifique de <_ 10 m²/g, et une surface spécifique d'un matériau d'électrode négative est mesurée en utilisant un analyseur de surface spécifique Mcgrams.

15. Batterie lithium ion, comprenant le matériau d'électrode négative selon l'une quelconque des revendications 1 à 14.
